# EUROPEAN PATENT APPLICATION

(11) **EP 4 684 987 A1**
(43) Date of publication of application: **28.01.2026**
(21) Application number: 25190612.9
(22) Date of filing: 21.07.2025
(51) Int. Cl.: B60H 1/00, B60H 1/32, F25B 6/02, F25B 5/02, F25B 41/20

(54) **THERMAL REGULATION SYSTEM FOR CABIN AND BATTERY OF AN ELECTRIC VEHICLE COMPRISING A GAS INJECTION HEAT PUMP CIRCUIT**

(30) Priority: 24.07.2024 FR 2408208
(71) Applicant: Denso Thermal Systems Spa, 10046 Poirino, (TO) (IT); Ampere SAS, 92100 Boulogne-Billancourt (FR)
(72) Inventor: DE LUCA, Amedeo, 10046 POIRINO TO (IT); FIARD, Jean-Michel, 78280 GUYANCOURT (FR); MARACHLIAN, Jacques, 78280 GUYANCOURT (FR); MASSANO, Cristiano, 10046 POIRINO TO (IT)
(74) Representative: Casalonga

(57) **Abstract**

This thermal regulation system comprises a gas injection heat pump circuit (1) configured to thermally regulate the cabin of an electric vehicle or a hybrid electric vehicle. The system further comprises a battery heating circuit (60) provided with a battery heating heat exchanger (61) configured to supply heat to a heat exchange fluid of a thermal management circuit (BC) of a battery (B) of the vehicle. The gas injection heat pump circuit comprises a separator-valve assembly (55) placed downstream of the battery heating circuit (60), said separator-valve assembly (55) being operable to separate the refrigerant into gas and liquid phases, and being configured to selectively inject the gas phase in a compressor (10) of the heat pump circuit (1) and inject the liquid phase in an external heat exchanger (3).

## Description

### Field of the Art

The present invention relates to a thermal regulation system for the cabin and battery of an electric or hybrid vehicle. More precisely, the present invention relates to a thermal regulation system comprising a heat pump circuit.

### State of the Art

Electric or hybrid electric vehicles have little waste heat, so they typically rely on electric heaters to warm the cabin, and/or the battery, and/or the electric drive system components.

Electric heaters use high-voltage battery power to generate heat, which is then distributed to the desired parts of the vehicle.

Electric heaters are costly elements of electric vehicle thermal systems with high electrical energy consumption, so reducing or eliminating them would be beneficial both economically and in terms of energy savings.

Thermodynamic heating systems, such as heat pump circuits, are used to reduce the need for electric heating.

However, the efficiency of thermodynamic heating systems is thermally limited at low temperatures, notably because refrigerant mass-flow rate drops with ambient temperature.

Gas injection technology, which separates the gas and liquid phases of a refrigerant before entering an external heat exchanger and injects the gas portion into the compressor, can improve heating performance of thermodynamic heating systems by making the refrigerant mass-flow rate less sensitive to external temperature conditions.

However, when the external temperature drops below a certain threshold (e.g. -10°C), the gas injection system cannot heat the cabin sufficiently to meet the passengers' comfort requirements. In this case, a high-voltage heater must make up the difference.

### Object of the Invention

One aim of the present invention is to increase the heating performance at severe negative ambient temperatures, thereby at least partially avoiding the use of high voltage heaters.

According to one embodiment, a system for thermal regulation comprises a gas injection heat pump circuit configured to thermally regulate the cabin of an electric vehicle or a hybrid electric vehicle. The system further comprises a battery heating circuit provided with a battery heating heat exchanger configured to supply heat to a heat exchange fluid of a thermal management circuit of a battery of the vehicle. In addition to regulating the temperature in the cabin, such a system can also provide heat to the vehicle's battery. By using at least partially the thermal management fluid as heat sink, the coefficient of performance of the heat pump system increases, because of the lower temperature difference between the cold source (external temperature) and the heat sink (thermal management fluid's temperature as compared to cabin temperature). Furthermore, the gas injection heat pump maximizes efficiency by selectively increasing a flow rate of refrigerant, thus improving electric consumption. In addition, such a system reduces or even eliminates the use of electric heaters for battery heating, further improving electric consumption.

In such a thermal regulation system, when battery heating is not required anymore, the heat supplied by the heat pump circuit can advantageously be stored in the thermal management fluid of the battery. For example, in case of need for cabin heating, the stored heat can be retrieved from the battery thermal management fluid through a heat recovery mode. Such a heat recovery mode does not worsen the drag coefficient of the vehicle, as in the case when an external heat exchanger is used to heat an incoming air stream.

Also, when an Electric Route Planner (ERP) detects a short vehicle trip with cabin dehumidification/cooling requirements (e.g. from home to office or similar), the thermal energy can be transferred to the battery rather than to the environment, taking advantage of the energy saving by keeping the air grille shutter closed and the front cooling fan in an off mode. The battery can slowly dissipate the received heat during the parking period (e.g. overnight or when parked during office hours).

More generally, such a system allows an energetically optimized strategy for storing and releasing heat to meet battery and cabin heating requirements.

In one embodiment, the battery heating circuit is placed downstream of a compressor of the heat pump circuit and is mounted in parallel with a cabin heating condenser of the heat pump circuit.

During cabin cooling conditioning, such a condenser can be used to recover heat from cabin and to transfer it to the battery through the battery heating circuit and achieve a quick-charge compatible battery temperature.

Advantageously, the battery heating circuit is provided with a first valve mounted upstream of the battery heating heat exchanger, the heat pump circuit being provided with a second valve mounted downstream of the compressor and upstream of the cabin heating condenser.

For example, the first and second valves are both expansion valves or shut-off valves.

Preferably, the battery heating circuit is provided with a first check valve mounted downstream of the battery heating heat exchanger, the heat pump circuit being provided with a second check valve mounted downstream of the cabin heating condenser.

Advantageously, the system further comprises a battery cooling circuit provided with a battery cooling heat exchanger configured to extract heat from the heat exchange fluid of the thermal management circuit of the battery. Such a system improves efficiency by recovering waste heat generated by the battery and using it for cabin heating. Furthermore, by efficiently controlling a temperature of the battery, it is possible to operate the battery at optimal performance, and a total mileage of the vehicle may be increased through efficient management of the battery.

In one embodiment, the battery cooling circuit is provided upstream of a compressor of the heat pump circuit and is mounted in parallel with a cabin cooling evaporator of the heat pump circuit.

For example, the fluid used by the thermal management circuit of the battery is water.

Preferably, the system is provided with an electric air heater for cabin heating.

According to another aspect, the invention relates to an electric or a hybrid electric vehicle comprising a thermal regulation system as described above.

### Description of the Drawings

The present invention and its advantages will be better understood by studying the detailed description of a specific embodiment given by way of non-limiting example and illustrated by the appended drawings on which:
[Fig 1] illustrates a block diagram of a thermal regulation system for a vehicle according to an embodiment of the invention;
[Fig 2] is a cross-section view of a gas-liquid separator valve of the thermal regulation system of Figure 1 during an active gas injection cycle; and
[Fig 3] is a view of the separator valve of Figure 2 during an inactive gas injection cycle.

### Detailed Description

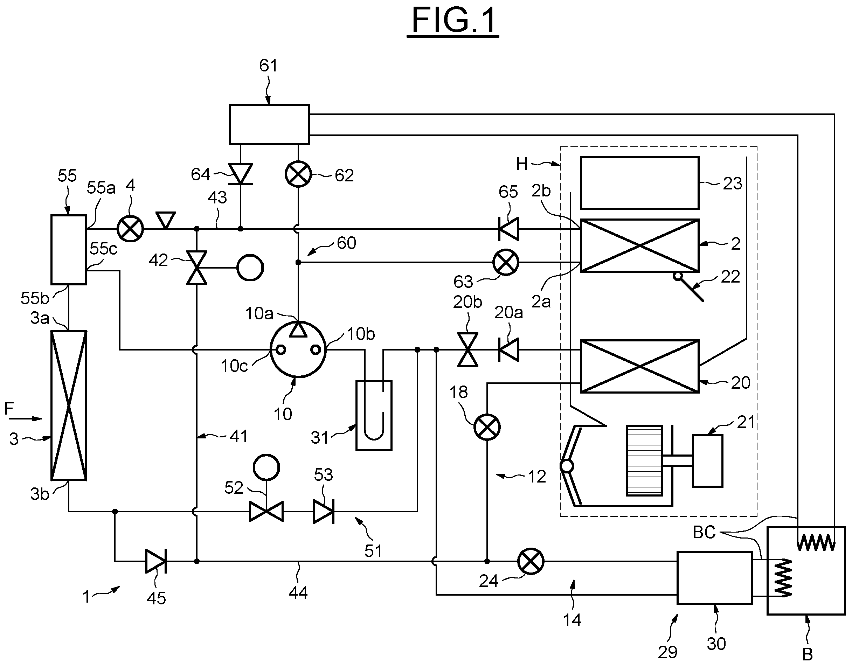

The thermal regulation system represented on Figure 1 comprises a gas injection heat pump circuit 1 configured to circulate a refrigerant to thermally regulate the cabin of an electric or a hybrid electric vehicle.

The heat pump circuit 1 comprises a cabin heating condenser 2 and an external heat exchanger 3.

The cabin heating condenser 2, is configured to be installed inside a climate control unit H intended for air conditioning inside the cabin of the vehicle. The external heat exchanger 3 is configured to be installed on the front side of the vehicle and has a surface for heat exchange between the refrigerant and a flow F of air intended to pass through the heat exchanger 3.

The heat pump circuit 1 comprises a compressor 10 and, downstream of the compressor 10 in the direction of refrigerant flow, the cabin heating condenser 2 and the external heat exchanger 3. An inlet 2a of the cabin heating condenser 2 is connected to a discharge side 10a of the compressor 10.

The thermal regulation system further comprises a battery cooling circuit 29 provided with a battery cooling heat exchanger 30. The battery cooling circuit 29 is provided upstream of a compressor 10 of the heat pump circuit 1 and is mounted in parallel with the cabin cooling evaporator 20 of the heat pump circuit 1.

As illustrated on Figure 1, further downstream of heat exchanger 3, the thermal regulation system comprises a first branch 12 provided on the heat pump circuit and a second branch 14 provided on the battery cooling circuit 29. The first and second branches 12, 14 are arranged in parallel between the external heat exchanger 3 and the compressor 10.

The first branch 12 is provided with a first expansion valve 18 and a cabin cooling evaporator 20. The cabin cooling evaporator 20 is part of the air conditioning unit H and is configured to allow a heat exchange between the refrigerant of the heat pump circuit 1 and a flow of air intended to cool the cabin of the vehicle. The air conditioning unit H may further comprise a fan 21 or blower configured to generate said air flow, a door assembly 22 configured to direct/deflect said air flow according to predetermined paths, and an electric heater 23, for example a PTC heater or self-regulating heater, configured to heat said air flow. The first branch 12 further comprises a non-return or check valve 20a.

The second branch 14 is provided with a second expansion valve 24 and the battery cooling heat exchanger 30.

The battery cooling heat exchanger 30, commonly known as a 'chiller', is configured to extract heat from a heat exchange fluid of a thermal management system BC of a battery B of the vehicle.

As shown in a simplified manner on figure 1, the fluid for the thermal management of the battery B circulates in a separate circuit BC dedicated to the thermal management of the battery B.

If cooling of the battery B is required, the heat exchange between the refrigerant of circuit 1 and the thermal management fluid of battery B inside the chiller 30 causes evaporation of the refrigerant and, consequently, cooling of the thermal management fluid of the battery.

The circuit 1 may further comprise an accumulator 31, arranged downstream of a confluence point between the first branch 12 and the second branch 14 and upstream of the compressor 10. An outlet of the accumulator 31 is connected to a first suction inlet 10b of the compressor 10.

The heat pump circuit 1 may further comprise a first bypass branch 41, having an upstream end connected to a return pipe 43 of the circuit 1 connecting an inlet 3a of the external heat exchanger 3 and the third expansion valve 4 to an outlet 2b of the cabin heating condenser 2, and a downstream end connected to a pipe 44 connecting a branch point of the first branch 12 and the second branch 14 to an outlet 3b of the external heat exchanger 3. The first bypass branch 41 comprises a two-way valve 42, which is controllable to selectively assume a first position in which the first bypass branch 41 is closed and the circuit 1 is configured to operate in a cooling, heating or cabin de-humidification configuration, and a second position in which the first bypass branch 41 is open and the circuit 1 is configured to operate in a heating configuration with waste heat recovery. In the cooling configuration, the heat exchanger 3 ensures that the heat generated by the cooling of the battery B, via the chiller 30, and/or the air-conditioning unit H, after its pass through the cabin heating condenser 2, is dissipated into the air.

A check valve 45 may also be arranged on the pipe 44, upstream of the downstream end of the first bypass branch 41.

The heat pump circuit 1 may further comprise a second bypass branch 51, having an upstream end connected to the pipe 44 upstream of the associated check valve 45, and a downstream end connected to an inlet of the accumulator 31. The second bypass branch 51 comprises a two-way valve 52, which is controllable to selectively assume a first position in which the second bypass branch 51 is closed and the refrigerant from the external heat exchanger 3 is routed to the first branch 12 and the second branch 14, and a second position in which the second bypass branch 51 is open and the refrigerant from the external heat exchanger 3 is routed to the accumulator 31. The second bypass branch 51 further comprises a check valve 53.

The heat pump circuit 1 further comprises a separator-valve assembly 55 positioned downstream of a third expansion valve 4 and upstream of the external heat exchanger 3. The separator-valve assembly 55 comprises an inlet 55a connected to the outlet 2b of the cabin heating condenser 2 via a check valve 65 and the third expansion valve 4. The separator-valve assembly 55 further comprises a first outlet 55b connected to the inlet 3a of the external heat exchanger 3, and a second outlet 55c connected to a second suction inlet 10c of the compressor 10.

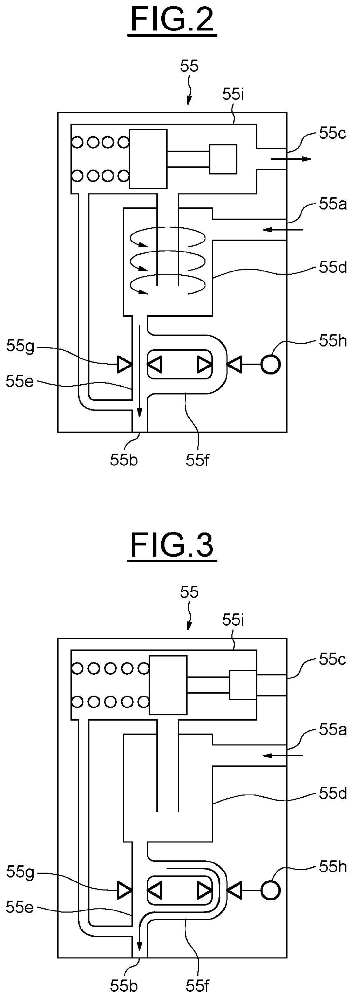

An example of a separator-valve assembly is illustrated in Figures 2 and 3, on which the separator-valve assembly 55 is shown respectively in an active gas injection cycle position and an inactive gas injection cycle position. In the illustrated example, the separator-valve assembly 55 comprises a gas-liquid separator 55d arranged downstream of the inlet 55a of the separator-valve assembly 55. A liquid outlet of the gas-liquid separator is connected to the first outlet 55b of the separator-valve assembly 55 via a first duct 55e and a second duct 55f arranged in parallel with the first duct 55e. The first duct 55e is provided with a throttle 55g, and the second duct 55f is provided with a two-way valve 55h, operable to selectively close (Figure 2) or open (Figure 3) the second duct 55f. A gas outlet of the gas-liquid separator 55d is connected to the second outlet 55c of the separator-valve assembly 55 via a valve 55i which selectively allows (Figure 2) or prevents (Figure 3) fluid communication between the gas outlet and the second outlet 55c of the separator-valve assembly 55 depending on the pressure difference between the gas outlet of the gas-liquid separator 55d and the first outlet 55b of the separator-valve assembly 55. The construction shown on Figures 2a and 2b is only one possible example of an embodiment of the separator-valve assembly 55, being clear to the skilled person that other known architectures can be used to achieve the gas injection cycle.

The gas injection cycle (Figure 2a) expands the refrigerant from a high-pressure level to an intermediate pressure level. This results in a two-phase refrigerant at intermediate pressure that is separated into gas and liquid. The gas is re-injected into the compressor 10, and the liquid is further expanded and fed to the external heat exchanger 3 for evaporation. The enthalpy increases since the gaseous refrigerant is fed back to the compressor at intermediate pressure, while the liquid refrigerant fraction for evaporation increases, which improves heat absorption from the external environment. Due to the injection of high-density gaseous refrigerant at the second suction inlet 10c of the compressor, the refrigerant mass-flow rate and heating performance also increase.

The thermal regulation system further comprises a battery heating circuit 60 provided with a battery heating heat exchanger 61.

The battery heating circuit 60 connects the discharge side 10a of the compressor to the return line 43 of the heat pump circuit 1. The battery heating circuit 60 is mounted in parallel with the cabin heating condenser 2 of the heat pump circuit 1.

The heating heat exchanger 61, preferably a condenser, is configured to supply heat to a heat exchange fluid of the thermal management circuit BC of the battery B of the vehicle.

Preferably, the heat exchange fluid of the thermal management circuit BC of the battery B is water.

On the figure 1, for the sake of simplicity, the thermal management circuit BC dedicated to the thermal management of the battery B is represented as two distinct circuits, one coupled to the cooling heat exchanger 30 and the other coupled to the heating heat exchanger 61. It is understood, however, that this is the same circuit, equipped with valves and other devices dedicated to sorting the thermal management fluid according to the objectives to be achieved (i.e. cooling or heating of the battery). The configuration of such a thermal management circuit is known and is not detailed here.

The battery heating circuit 60 is provided upstream of the battery heating heat exchanger 61 with a fourth expansion valve 62. Correspondingly, a fifth expansion valve 63 is arranged upstream of the passenger compartment condenser 2.

According to an alternative embodiment, both valves 62, 63 are shut-off valves.

The battery heating branch 60 is provided downstream of the battery heating heat exchanger 61 with a first check valve 64.

Correspondingly, a second check valve 65 is provided downstream of the cabin heating condenser 2.

If heating of the battery B is required, the heat exchange between the refrigerant of the circuit 1 and the thermal management fluid of battery B inside the heating heat exchanger 61 causes condensation of the refrigerant and, consequently, heating of the thermal management fluid of the battery B.

While the disclosure has been described in connection with what is presently considered to be practical embodiments, it is to be understood that the disclosure is not limited to the disclosed embodiments, but, on the contrary, is intended to cover various modifications and equivalent arrangements included within the spirit and scope of the appended claims.

## Claims

1. System for thermal regulation comprising a gas injection heat pump circuit (1) configured circulate a refrigerant to thermally regulate the cabin of an electric vehicle or a hybrid electric vehicle, **characterized in that** said system further comprises a battery heating circuit (60) provided with a battery heating heat exchanger (61) configured to supply heat to a heat exchange fluid of a thermal management circuit (BC) of a battery (B) of the vehicle, said gas injection heat pump circuit comprising a separator-valve assembly (55) placed downstream of the battery heating circuit (60), said separator-valve assembly (55) being operable to separate the refrigerant into gas and liquid phases, and being configured to selectively inject the gas phase in a compressor (10) of the heat pump circuit (1) and inject the liquid phase in an external heat exchanger (3).

2. System according to claim 1, wherein the battery heating circuit (60) is placed downstream of the compressor (10) of the heat pump circuit (1) and is mounted in parallel with a cabin heating condenser (2) of the heat pump circuit (1).

3. System according to claim 2, wherein the battery heating circuit (60) is provided with a valve (62) mounted upstream of the battery heating heat exchanger (61), the heat pump circuit (1) being provided with another valve (63) mounted downstream of the compressor (10) and upstream of the cabin heating condenser (2).

4. System according to claim 3, wherein the valves (62, 63) are both expansion valves or shut-off valves.

5. System according to any of the claims 1 to 4, wherein the battery heating circuit (60) is provided with a first check valve (64) mounted downstream of the battery heating heat exchanger (61), the heat pump circuit (1) being provided with a second check valve (65) mounted downstream of the cabin heating condenser (2).

6. System according to any of the claims 1 to 5, wherein said system further comprises a battery cooling circuit (29) provided with a battery cooling heat exchanger (30) configured to extract heat from the heat exchange fluid of the thermal management circuit (BC) of the battery (B).

7. System according to claim 6, wherein the battery cooling circuit (29) is provided upstream of a compressor (10) of the heat pump circuit (1) and is mounted in parallel with a cabin cooling evaporator (20) of the heat pump circuit (1).

8. System according to any of the claims 1 to 7, wherein the fluid used by the thermal management circuit of the battery (B) is water.

9. System according to any of the claims 1 to 8, wherein said system is provided with an electric air heater (23) for cabin heating.

10. Electric or hybrid electric vehicle comprising a thermal regulation system according to any of the claims 1 to 9.
